# EUROPÄISCHE PATENTSCHRIFT

(11) **EP 3 575 753 B1**
(45) Veröffentlichungstag und Bekanntmachung des Hinweises auf die Patenterteilung: **15.06.2022**
(21) Anmeldenummer: 19172789.0
(22) Anmeldetag: 06.05.2019
(51) Int. Cl.: G01F 1/58, F15D 1/02

(54) **MAGNETISCH-INDUKTIVES DURCHFLUSSMESSGERÄT UND MESSROHR**
MAGNETIC-INDUCTIVE FLOW MEASURING APPARATUS AND MEASURING TUBE
DÉBITMÈTRE À INDUCTION MAGNÉTIQUE ET TUBE DE MESURE

(30) Priorität: 30.05.2018 DE 102018112897
(43) Veröffentlichungstag der Anmeldung: 04.12.2019
(73) Patentinhaber: Krohne Messtechnik GmbH, 47058 Duisburg (DE)
(72) Erfinder: Brockhaus, Helmut, 46145 Oberhausen (DE)
(74) Vertreter: Gesthuysen Patentanwälte

(56) Entgegenhaltungen:
- EP-A1- 2 600 119
- DE-A1-102014 119 451
- DE-A1-102016 008 302
- US-A1- 2005 199 073
- US-A1- 2017 122 785

## Beschreibung

Die Erfindung betrifft ein magnetisch-induktives Durchflussmessgerät zur Bestimmung des Durchflusses eines Mediums, mit einem Messrohr zum Führen des Mediums entlang einer Längsachse des Messrohres und mit zwei Elektroden zum Abgreifen einer in dem Medium induzierten Messspannung, wobei das Messrohr in Strömungsrichtung des Mediums gesehen hintereinander angeordnet einen Einströmabschnitt, einen Messabschnitt und einen Ausströmabschnitt aufweist, wobei der Einströmabschnitt einen sich in Strömungsrichtung verringernden Querschnitt aufweist, wobei der Messabschnitt einen konstanten Querschnitt aufweist und symmetrisch in Bezug auf wenigstens eine Messabschnittsymmetrieebene ausgebildet ist, wobei die wenigstens eine Messabschnittsymmetrieebene parallel zur Längsachse des Messrohrs verläuft und wobei der Ausströmabschnitt einen sich in Strömungsrichtung vergrößernden Querschnitt aufweist.

Messrohre der in Rede stehenden magnetisch-induktiven Durchflussmessgeräte weisen einen Einströmabschnitt auf, der zum Anschluss des magnetisch-induktiven Durchflussmessgerätes an eine Mediumzufuhr dient. Der Messrohrquerschnitt ist an der Einlassseite des Einströmabschnitts meist rund ausgeformt und an genormte Rohrgrößen angepasst, um einen problemlosen Anschluss an die Mediumzufuhr zu gewährleisten.

Auf den Einströmabschnitt folgt in Strömungsrichtung gesehen der Messabschnitt. Der Messabschnitt ist definiert als derjenige Bereich, der von dem Magnetfeld durchsetzt wird und in dem die eigentliche Durchflussmessung erfolgt. Der Messabschnitt weist einen verringerten Querschnitt auf, wodurch sich die Strömungsgeschwindigkeit des Mediums erhöht. Durch die erhöhte Strömungsgeschwindigkeit kann die Messgenauigkeit erhöht werden, bzw. das Messsignal verstärkt werden.

Wenn hier von einem "verringerten Querschnitt" die Rede ist, dann ist dies eine vereinfachte, aber ohne Weiteres verständliche Formulierung für "verringerter Flächeninhalt der Querschnittsfläche". Dies ist einleuchtend, da ohne diese geometrische Eigenschaft die Strömungsgeschwindigkeit im Messabschnitt nicht erhöht werden könnte. Bei den hier angestellten Betrachtungen ergibt sich ein Querschnitt stets durch Schneiden des Messrohres senkrecht zur Strömungsrichtung.

Der Messabschnitt ist symmetrisch in Bezug auf eine Messabschnittsymmetrieebene ausgebildet, wird also von der Messabschnittsymmetrieebene in zwei gleiche Teile geteilt. Die Messabschnittsymmetrieebene verläuft parallel zu einer Längsachse des Messrohres, wobei die Längsachsenrichtung des Messrohres definiert ist als die Richtung, entlang der das Medium insgesamt - also gemittelt über eine Querschnittsfläche - durch das Messrohr strömt. Bei symmetrischen Messrohren ist die Längsachse also die Mittel- und Symmetrieachse des Messrohres. Einströmabschnitt, Messabschnitt und Ausströmabschnitt liegen also entlang der Längsachse des Messrohres hintereinander angeordnet. Die Messabschnittsymmetrieebene teilt also den Messabschnittquerschnitt in einen ersten Teilquerschnitt und in einen zweiten Teilquerschnitt, wobei der erste Teilquerschnitt dem an der Messabschnittsymmetrieebene gespiegeltem zweiten Teilquerschnitt entspricht. Wenn es heißt, dass die Messabschnittsymmetrieebene parallel zur Längsachse des Messrohres verläuft, dann ist hiermit nicht zwangsläufig gemeint, dass die Längsachse und die Messabschnittsymmetrieebene beabstandet voneinander verlaufen. Vielmehr kann die Längsachse des Messrohres auch in der Messabschnittsymmetrieebene liegen.

In einigen Ausgestaltungen weist der Messabschnitt nicht nur einen reduzierten Querschnitt, sondern zudem eine andere Querschnittsgeometrie auf als die Einlassseite des Einströmabschnitts. Besonders bevorzugt sind im Stand der Technik rechteckige Messabschnittquerschnitte. Die Elektroden sind dann bevorzugt an den kurzen Seiten des Messabschnitts angeordnet sind, da ein vergrößerter Abstand der Elektroden voneinander ein verbessertes Messsignal hervorruft.

Wenn es heißt, dass der Messabschnitt einen konstanten Querschnitt aufweist, dann ist damit gemeint, dass der Querschnitt seiner Fläche und seiner Form nach gleichbleibend ist.

An den Messabschnitt grenzt in Strömungsrichtung gesehen der Ausströmabschnitt an. Im Bereich des Ausströmabschnitts kommt es wieder zu einer Vergrößerung des Querschnitts. An der Auslassseite des Ausströmabschnitts, die an eine Mediumabfuhr anschließbar ist, ist der Querschnitt in der Regel wieder rund und entspricht genormten Rohrmaßen. Durch die Vergrößerung des Querschnitts wird die Durchflussgeschwindigkeit des Mediums reduziert. Das führt zu einer inhomogenen Strömung im Bereich des Ausströmabschnitts, die sich insbesondere durch eine Anlehnung der Strömung an eine Messrohrseite bemerkbar macht, wobei die Anlehnung nicht zwangsläufig an die gleiche Messrohrseite erfolgt. Durch die inhomogene, nicht vorhersehbare und teilweise auch zeitlich veränderliche Strömungsverteilung kommt es zu einer Messungenauigkeit bei der Bestimmung des Durchflusses.

Aus der US 2005/199073 A1 ist ein Einsatz bekannt, der in ein Messrohr eines magnetisch-induktiven Durchflussmessgerätes eingesetzt werden kann. Der Einsatz weist einen Einströmabschnitt, einen Messabschnitt und einen Ausströmabschnitt auf und dient dazu, den Messquerschnitt des Messrohres zu verringern.

Die US 2017/122785 A1 offenbart ein magnetisch-induktives Durchflussmessgerät mit einem Messrohr, wobei das Messrohr einen Einströmabschnitt, einen Messabschnitt und einen Ausströmabschnitt aufweist. Der Messabschnitt des Messrohres weist eine Messabschnittsymmetrieebene auf und der Ausströmabschnitt des Messrohres ist symmetrisch in Bezug auf die Messabschnittsymmetrieebene ausgebildet.

Ausgehend vom beschriebenen Stand der Technik liegt der Erfindung die Aufgabe zugrunde, ein magnetisch-induktives Durchflussmessgerät anzugeben, bei dem die Messgenauigkeit erhöht ist.

Die Aufgabe ist bei dem erfindungsgemäßen magnetisch-induktiven Durchflussmessgerät zunächst und im Wesentlichen dadurch gelöst, dass der Ausströmabschnitt zumindest teilweise asymmetrisch in Bezug auf die wenigstens eine Messabschnittsymmetrieebene ausgebildet ist.

Erfindungsgemäß ist zunächst erkannt worden, dass unterschiedliche Durchflussmesswerte ermittelt werden, je nachdem zu welcher Seite des Messrohres sich die Strömung anlehnt. Der Erfindung liegt demnach die Idee zugrunde, eine Anlehnung zu einer einzigen Seite des Messrohres zu erzwingen, was durch die Ausbildung eines asymmetrischen Ausströmabschnitts realisiert wird. Dadurch, dass die Strömung sich bei dem erfindungsgemäßen magnetisch-induktiven Messgerät nur an eine Seite des Messrohres anlehnt, kommt es nicht mehr zu unterschiedlichen Messwerten, wodurch die Messgenauigkeit des Durchflusses gegenüber den bekannten magnetisch-induktiven Durchflussmessgeräten verbessert ist.

In der Regel weist der Messabschnitt nicht nur eine, sondern mehrere Messabschnittsymmetrieebenen auf. In einer Ausführungsform weist der Messabschnitt einen im Wesentlichen rechteckigen Querschnitt auf. Wenn es heißt, dass der Querschnitt im Wesentlichen rechteckig ausgebildet ist, dann fallen hierunter sämtliche Querschnitte, die zwei sich parallel gegenüberliegende Längsseiten aufweisen, wobei die sich ebenfalls gegenüberliegenden kurzen Seiten nicht zwangsläufig gerade Seiten sein müssen, sondern insbesondere auch eine kreissegmentförmige Ausgestaltung haben können. Bei einem derartigen Messrohr wird in einer Ausgestaltung des erfindungsgemäßen magnetisch-induktiven Durchflussmessgerätes diejenige Messabschnittsymmetrieebene gewählt, die parallel zu einer Längsseite des Querschnitts liegt. Der Messabschnittquerschnitt wird durch die Messabschnittsymmetrieebene also entlang seiner Längserstreckung geteilt.

In einer alternativen Ausgestaltung weist der Messabschnitt einen quadratischen Querschnitt auf, weist also vier gleich lange Seiten auf, die jeweils im rechten Winkel aufeinander stehen. Hierunter fallen auch diejenigen Ausgestaltungen, in denen die Ecken abgerundet ausgebildet sind. Das Messrohr weist also einen im Wesentlichen quadratischen Querschnitt auf. Bei einer derartigen Ausgestaltung wird bevorzugt eine Messabschnittsymmetrieebene ausgewählt, die parallel zu einer der vier gleich langen Seiten des Messabschnitts verläuft. Insbesondere wird also nicht eine solche Symmetrieebene ausgewählt, die den Messabschnitt diagonal durchschneidet, bei der also zwei sich diagonal gegenüberliegende Ecken in der Messabschnittsymmetrieebene liegen.

Die nachfolgenden Ausgestaltungen sind jedoch von der konkreten Ausgestaltung bzw. Form des Querschnitts des Messabschnitts unabhängig und finden bei jeder beliebigen Ausgestaltung Anwendung. Wesentlich ist nur, dass der Messabschnitt zumindest eine Messabschnittsymmetrieebene aufweist.

Eine besonders bevorzugte Ausgestaltung des magnetisch-induktiven Durchflussmessgerätes zeichnet sich dadurch aus, dass der Ausströmabschnitt über seine gesamte Länge asymmetrisch in Bezug auf die wenigstens eine Messabschnittsymmetrieebene ausgebildet ist. Wenn von der Länge des Ausströmabschnitts die Rede ist, dann ist damit die Ausdehnung des Ausströmabschnitts entlang der Längsachse des Messrohres gemeint.

In einer alternativen Ausgestaltung des magnetisch-induktiven Durchflussmessgerätes ist der Ausströmabschnitt über eine begrenzte Längserstreckung asymmetrisch in Bezug auf die wenigstens eine Messabschnittsymmetrieebene ausgebildet. Der Ausströmabschnitt weist also nur in einem begrenzten Bereich eine Asymmetrie in Bezug auf die Messabschnittsymmetrieebene auf.

Erfindungsgemäß sind verschiedene Ausgestaltungen vorgesehen, mit denen die Asymmetrie des Ausströmabschnitts in Bezug auf die Messabschnittsymmetrieebene erzeugt wird.

In einer besonders bevorzugten Ausgestaltung wird die Asymmetrie dadurch ausgebildet, dass der Messabschnitt relativ zum Einströmabschnitt und relativ zum Ausströmabschnitt in einer Richtung senkrecht zur wenigstens einen Messabschnittsymmetrieebene versetzt angeordnet ist. Eine derartige Ausgestaltung ist insbesondere dann vorteilhaft, wenn der Messabschnitt einen rechteckigen Querschnitt aufweist. Durch den Versatz des Messabschnitts lässt sich auf einfache Art und Weise die Asymmetrie erzeugen. Die Ausgestaltung hat den Vorteil, dass keine Fremdkörper in das Messrohr eingebracht werden müssen, insbesondere auch, dass die Strömung des Mediums nicht durch Unebenheiten der Innenfläche des Messrohres oder durch Fremdkörper gestört wird.

In einer weiteren bevorzugten Ausgestaltung wird die Asymmetrie dadurch ausgebildet, dass wenigstens ein Einlageelement im Ausströmabschnitt angeordnet ist. Das Einlageelement ist in einer Ausgestaltung in dem Ausströmabschnitt eines Messrohrs mit ursprünglich symmetrischem Ausströmabschnitt in Bezug auf die wenigstens eine Messabschnittsymmetrieebene angeordnet. In einer anderen Ausgestaltung ist das Einlageelement in dem Ausströmabschnitt eines Messrohrs angeordnet, der bereits asymmetrisch in Bezug auf die wenigstens eine Messabschnittsymmetrieebene ausgebildet ist. Durch das Einlageelement wird die Asymmetrie demnach verstärkt. Das Einlageelement selbst ist in verschiedenen Ausgestaltungen unterschiedlich realisiert. In einer bevorzugten Ausgestaltung ist das Einlageelement durch eine Epoxidharzschicht gebildet. Diese Ausgestaltung hat den Vorteil, dass die Größe des Einlageelements noch beim Einbringen des Einlageelements in den Ausströmabschnitt gewählt werden kann.

Insgesamt bietet die Ausbildung der Asymmetrie durch ein Einlageelement den Vorteil, dass bereits gefertigte Messrohre von magnetisch-induktiven Durchflussmessgeräten auf einfache Art und Weise nachgerüstet, nämlich mit einem asymmetrischen Ausströmabschnitt ausgestattet, werden können.

Eine weitere bevorzugte Ausgestaltung ist dadurch gekennzeichnet, dass die Asymmetrie durch eine den Querschnitt reduzierende stufenförmige Erhebung im Ausströmabschnitt ausgebildet ist. Bevorzugt ist die stufenförmige Erhebung über den gesamten Umfang des Ausströmabschnitts ausgebildet. Um dann eine Asymmetrie zu erzielen, ist die Erhebung auf einer ersten Seite der wenigstens einen Messabschnittsymmetrieebene zumindest teilweise flacher ausgebildet als auf einer zweiten Seite der Symmetrieebene. In einer bevorzugten Ausgestaltung, in der das gesamte Messrohr aus zwei Messrohrteilen zusammengefügt ist, wird die stufenförmige Erhebung durch die Fügenaht gebildet. Vorteilhaft an dieser Ausgestaltung ist, dass dass die an sich störende, nämlich die Strömung des Mediums störende Fügenaht vorteilhaft genutzt wird. Wenn von einer stufenförmigen Erhebung die Rede ist, dann ist damit nicht ausschließlich eine derartige Erhebung gemeint, die einen rechten Winkel aufweist. Vielmehr kann die Erhebung auch einen Winkel kleiner oder größer 90 Grad aufweisen oder leicht abgerundete Ecken aufweisen. Durch die stufenförmige Erhebung wird der Querschnitt des Messrohres im Bereich der stufenförmigen Erhebung in Strömungsrichtung reduziert.

In einer weiteren bevorzugten Ausgestaltung ist die Asymmetrie des Ausströmabschnitts in Bezug auf die wenigstens eine Messabschnittsymmetrieebene durch eine den Querschnitt reduzierende Aufwölbung im Ausströmabschnitt ausgebildet. Unter einer Aufwölbung wird hier eine Erhebung verstanden, die einen stetigen Verlauf hat. Vorteilhaft gegenüber der stufenförmigen Erhebung ist bei der Ausbildung der Aufwölbung, dass die Wirbelbildung im Medium im Bereich der Aufwölbung reduziert ist gegenüber der Wirbelbildung im Bereich der stufenförmigen Erhebung, da es nicht zu einer Reflexion des Mediums an der Stufe kommt, vielmehr das Medium über die Aufwölbung fließt. Um eine Asymmetrie zu realisieren, ist die Aufwölbung nur auf einer Seite der Messabschnittsymmetrieebene ausgestaltet oder ist die Aufwölbung auf einer Seite der Messabschnittsymmetrieebene stärker ausgebildet als auf der anderen Seite der Messabschnittsymmetrieebene.

Die bisher beschriebenen magnetisch-induktiven Durchflussmessgeräte eignen sich insbesondere für derartige Anwendungen, bei denen das Medium lediglich in eine Richtung durch das Messrohr fließt.

Manche Anwendungen erfordern einen bidirektionalen Durchfluss des Mediums durch das Messrohr. Besonders bevorzugte Ausgestaltungen des erfindungsgemäßen magnetisch-induktiven Durchflussmessgerätes sehen daher vor, dass auch der Einströmabschnitt zumindest teilweise asymmetrisch in Bezug auf die wenigstens eine Messabschnittsymmetrieebene ausgebildet ist.

Um eine Wirbelbildung im Bereich des Messabschnitts zu verhindern, ist bei einer ganz besonders bevorzugten Ausgestaltung des magnetisch-induktiven Durchflussmessgerätes vorgesehen, dass der Einströmabschnitt über seine gesamte Länge asymmetrisch ausgebildet ist. Eine derartige Ausgestaltung ist bevorzugt gegenüber einer derartigen Ausgestaltung, bei der die Asymmetrie nur über eine begrenzte Längserstreckung ausgebildet ist. Gleichwohl ist auch eine Ausbildung der Asymmetrie nur über eine begrenzte Längserstreckung des Einströmabschnitts von der vorliegenden Erfindung umfasst.

Für die Ausgestaltungen der Asymmetrie des Einströmabschnitts sind jegliche Ausgestaltungen für die Asymmetrie des Ausströmabschnitts entsprechend realisierbar und übertragbar.

Bei einer besonders bevorzugten Ausgestaltung des magnetisch-induktiven Durchflussmessgerätes ist die Asymmetrie des Einströmabschnitts entsprechend der Asymmetrie des Ausströmabschnitts ausgebildet. Beide Asymmetrien sind also auf gleiche Art und Weise realisiert. In einer alternativen Ausgestaltung des magnetisch-induktiven Durchflussmessgerätes ist die Asymmetrie des Einströmabschnitts auf andere Art und Weise ausgebildet als die Asymmetrie des Ausströmabschnitts.

Neben dem magnetisch-induktiven Durchflussmessgerät wird zudem ein Messrohr für ein magnetisch-induktives Durchflussmessgerät beschrieben. Das Messrohr dient zum Führen eines Mediums entlang einer Längsachse des Messrohres für ein magnetisch-induktives Durchflussmessgerät und hat einen Einströmabschnitt, einen in Strömungsrichtung gesehen auf den Einströmabschnitt folgenden Messabschnitt und einen in Strömungsrichtung gesehen auf den Messabschnitt folgenden Ausströmabschnitt. Der Einströmabschnitt weist einen sich in Strömungsrichtung verringernden Querschnitt auf, der Messabschnitt weist einen konstanten Querschnitt auf und ist symmetrisch in Bezug auf wenigstens eine Messabschnittsymmetrieebene ausgebildet, die parallel zur Längsachse des Messrohres verläuft und der Ausströmabschnitt weist einen sich in Strömungsrichtung vergrößernden Querschnitt auf. Bei dem Messrohr ist der Ausströmabschnitt zumindest teilweise asymmetrisch in Bezug auf die wenigstens eine Messabschnittsymmetrieebene ausgebildet

Die Asymmetrie des Ausströmabschnitts des Messrohres ist insbesondere nach einer der bereits in Bezug auf das erfindungsgemäße magnetisch-induktive Durchflussmessgerät beschriebenen Ausgestaltungen ausgebildet.

Das Messrohr kann so ausgebildet sein, dass auch der Einströmabschnitt zumindest teilweise asymmetrisch in Bezug auf die wenigstens eine Messabschnittsymmetrieebene ausgebildet ist. Insbesondere ist der Einströmabschnitt über seine gesamte Länge asymmetrisch ausgebildet. Die Asymmetrie des Einströmabschnitts ist ebenfalls bevorzugt nach einer der bereits in Bezug auf das erfindungsgemäße magnetisch-induktive Durchflussmessgerät beschriebenen Ausgestaltungen ausgebildet.

Im Einzelnen gibt es nun eine Vielzahl von Möglichkeiten, das erfindungsgemäße magnetisch-induktive Durchflussmessgerät weiterzubilden und auszugestalten. Dazu wird verwiesen auf die dem unabhängigen Patentanspruch nachgeordneten Patentansprüche und auf die Beschreibung bevorzugter Ausführungsbeispiele in Verbindung mit der Zeichnung. In der Zeichnung zeigen
- Fig. 1a: ein magnetisch-induktives Durchflussmessgerät mit einer ersten Ausgestaltung eines Messrohres mit einem asymmetrischen Ausströmabschnitt,
- Fig. 1b: einen Querschnitt durch das Messrohr des in Fig. 1a dargestellten magnetisch-induktiven Durchflussmessgerätes,
- Fig. 2a: eine zweite Ausgestaltung eines Messrohres mit einem asymmetrischen Ausströmabschnitt,
- Fig. 2b: einen Querschnitt durch das Messrohr aus Fig. 2a,
- Fig. 3a: eine schematische Darstellung einer dritten Ausgestaltung eines Messrohres mit einem asymmetrischen Ausströmabschnitt,
- Fig. 3b: eine schematische Darstellung einer vierten Ausgestaltung eines Messrohres mit einem asymmetrischen Ausströmabschnitt,
- Fig. 3c: eine schematische Darstellung einer fünften Ausgestaltung eines Messrohres mit einem asymmetrischen Einströmabschnitt und einem asymmetrischen Ausströmabschnitt,
- Fig. 4: eine Draufsicht auf ein Messrohr mit quadratischem Messabschnitt,
- Fig. 5: eine Draufsicht auf ein Messrohr mit ovalem Messabschnitt und
- Fig. 6: eine Draufsicht auf ein Messrohr mit rundem Messabschnitt.

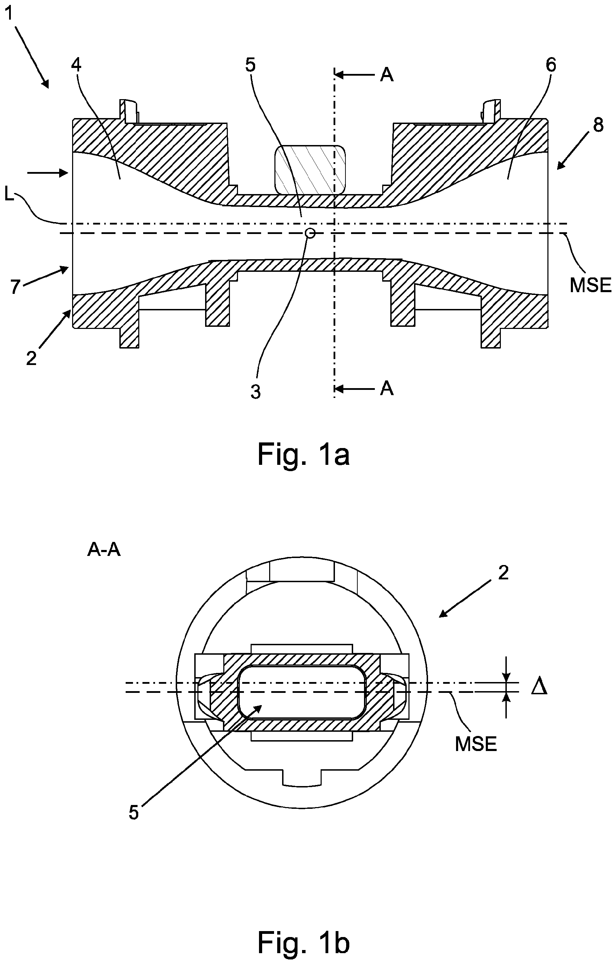

Fig. 1a zeigt eine schematische Darstellung eines erfindungsgemäßen magnetisch-induktiven Durchflussmessgerätes 1. Das magnetisch-induktive Durchflussmessgerät 1 weist ein Messrohr 2 zum Führen des Mediums entlang einer Längsachse L des Messrohres auf. Elektroden 3 dienen zum Abgreifen einer in dem Medium induzierten Messspannung. Das Messrohr 2 weist in Strömungsrichtung des Mediums, die durch einen Pfeil gekennzeichnet ist, hintereinander gesehen einen Einströmabschnitt 4, einen Messabschnitt 5 und einen Ausströmabschnitt 6 auf. Der Einströmabschnitt 4 weist an seiner Eingangsseite 7 einen runden Querschnitt auf. Der Querschnitt verringert sich über die Erstreckung des Einströmabschnitts 4.

In dem Bereich, in dem der Einströmabschnitt 4 in den Messabschnitt 5 übergeht, weist der Querschnitt des Einströmabschnitts eine rechteckige Form auf. Über die Länge des Messabschnitts 4 ändert sich der Querschnitt nicht, sodass der gesamte Messabschnitt 4 einen rechteckigen Querschnitt mit gleich bleibender Querschnittsfläche aufweist.

Erst im Bereich des Ausströmabschnitts 6 vergrößert sich der Querschnitt wieder und ändert sich zudem in seiner Form, sodass der Ausströmabschnitt 6 an seiner Auslassseite 8 einen runden Querschnitt aufweist. Der Messabschnitt 5 ist symmetrisch in Bezug auf die Messabschnittsymmetrieebene MSE ausgebildet, wobei die Messabschnittsymmetrieebene MSE parallel zur Längsachse L des Messrohres 2 liegt. In der dargestellten Ausführungsform liegt die Längsachse L des Messrohres 2 nicht in der Messabschnittsymmetrieebene MSE. Das ergibt sich dadurch, dass die Asymmetrie des Ausströmabschnitts 6 in Bezug auf die Messabschnittsymmetrieebene MSE dadurch ausgebildet ist, dass der Messabschnitt 5 relativ zum Ausströmabschnitt 6 und relativ zum Einströmabschnitt 4 in eine Richtung senkrecht zur Messabschnittsymmetrieebene MSE - hier nach unten - um eine Verschiebung Δ versetzt ist. Die Verschiebung Δ ist sehr gut in Fig. 1b zu erkennen, in der der Schnitt durch das Messrohr 2 entlang der Linie A-A dargestellt ist. Durch die Verschiebung des Messabschnitts 5 ergibt sich auch ein asymmetrisch ausgebildeter Einströmabschnitt 4. Das Messrohr 2 des dargestellten magnetisch-induktiven Durchflussmessgerätes 1 eignet sich demnach auch für einen bidirektionalen Durchfluss des Mediums.

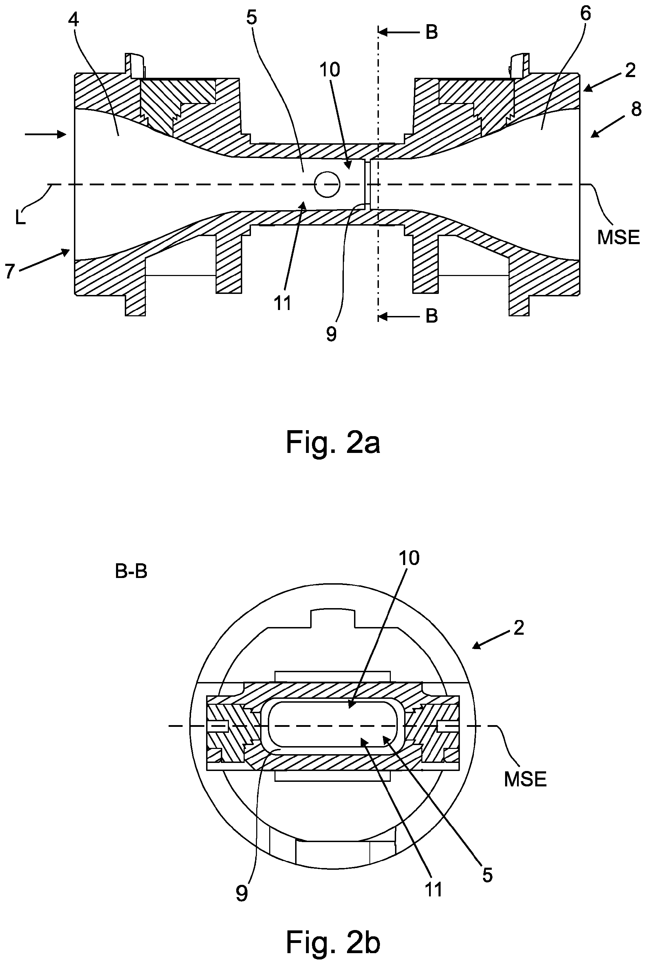

In Fig. 2 ist ein Messrohr 2 dargestellt, das lediglich einen asymmetrischen Ausströmabschnitt 6 aufweist. Wichtig zu beachten ist, dass der Messabschnitt 5 definiert ist als der Bereich des Messrohres, der von einem Magnetfeld durchsetzt ist und in dem die eigentliche Messung stattfindet. Dieser Bereich hat über seine gesamte Erstreckung einen gleich bleibenden Querschnitt. Der Messabschnitt 5 des Messrohres 2 aus Fig. 2a endet vor der stufenförmigen Erhebung 9. Die stufenförmige Erhebung 9 ist im Bereich des Ausströmabschnitts 6 angeordnet. Wie sowohl in der Fig. 2a als auch der Fig. 2b zu sehen ist, die einen Schnitt entlang der in Fig. 2a gekennzeichneten Linie B-B zeigt, erstreckt sich die stufenförmige Erhebung 9 über den gesamten Umfang des Ausströmabschnitts 6 und bedingt eine Reduzierung des Querschnitts des Messrohres im Bereich der stufenförmigen Erhebung 9. Im dargestellten Ausführungsbeispiel entspricht der Querschnitt des Messrohres 2 in Strömungsrichtung gesehen vor der stufenförmigen Erhebung 9 dem Querschnitt des Messrohres 2 in Strömungsrichtung gesehen nach der stufenförmigen Erhebung 9. Die Asymmetrie wird dadurch erzielt, dass die Stufenhöhe auf der ersten Seite 10 der Messabschnittsymmetrieebene MSE geringer ist als auf der zweiten Seite 11 der Messabschnittsymmetrieebene MSE. In der dargestellten Ausführungsform liegt die Längsachse L des Messrohres in der Messabschnittsymmetrieebene MSE.

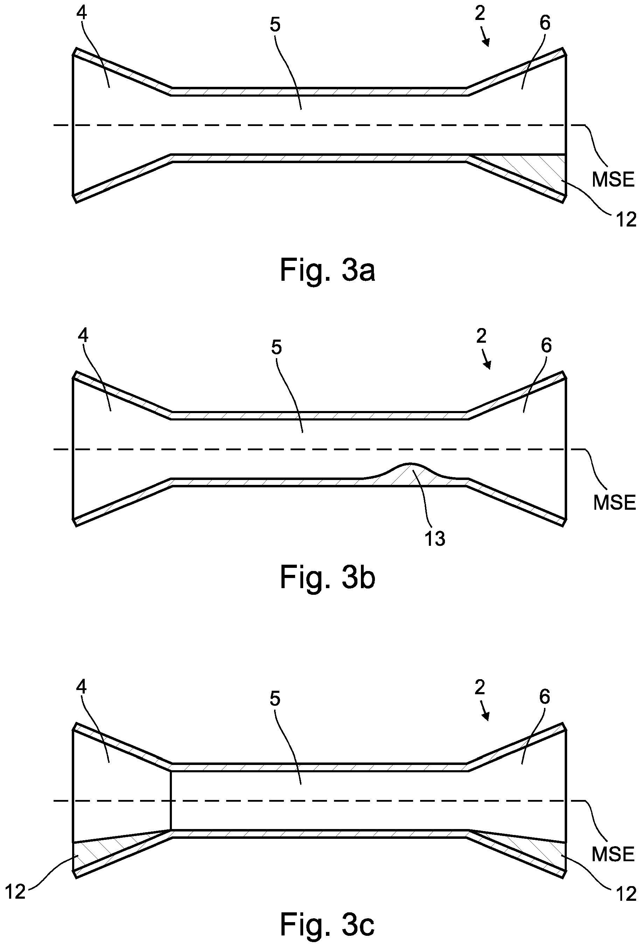

Fig.3 zeigt schematische Darstellungen verschiedener Messrohre 2 im Schnitt. Die Messrohre 2 weisen jeweils einen Einströmabschnitt 4, einen Messabschnitt 5 und einen Ausströmabschnitt 6 auf. Fig. 3a zeigt ein Messrohr 2, bei dem die Asymmetrie des Ausströmabschnitts 6 in Bezug auf die Messabschnittsymmetrieebene MSE durch ein in dem Ausströmabschnitt 6 angeordnetes Einlageelement 12 ausgebildet ist.

Bei dem in Fig. 3b dargestellten Messrohr 2 endet der Messabschnitt vor der den Querschnitt reduzierenden Aufwölbung 13, die im Bereich des Ausströmabschnitts 6 liegt. Die Asymmetrie des Ausströmabschnitts 6 ist bei dem in Fig. 3b dargestellten Messrohr 2 also durch die Aufwölbung 13 ausgebildet. Die Aufwölbung 13 führt zu einer Reduzierung des Querschnitts im Bereich der Aufwölbung 13. Im dargestellten Ausführungsbeispiel entspricht der Querschnitt des Messrohres 2 in Strömungsrichtung gesehen vor der Aufwölbung 13 dem Querschnitt des Messrohres 2 in Strömungsrichtung gesehen nach der Aufwölbung 13.

Fig. 3c zeigt ein Messrohr 2, bei dem sowohl der Ausströmabschnitt 6 als auch der Einströmabschnitt 4 asymmetrisch in Bezug auf die Messabschnittsymmetrieebene MSE ausgebildet sind. Die Asymmetrieen beider Abschnitte sind durch die Anordnung von Einlageelementen 12 ausgebildet. Im Gegensatz zu dem in Fig. 3a dargestellten Einlageelement 12 sind die in Fig. 3c dargestellten Einlageelemente 12 flacher ausgebildet.

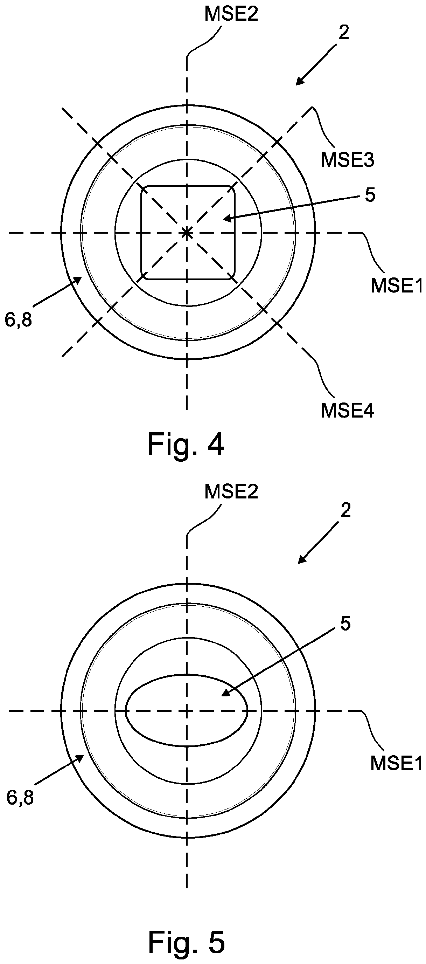

Die Fig. 4, 5 und 6 zeigen schematische Draufsichten auf das Messrohr 2. Zu sehen ist der Blick in die Auslassseite 8 des Ausströmabschnitts 6. Der Ausströmabschnitt 6 weist an seiner Auslassseite 8 einen runden Querschnitt auf. Da sich der Querschnitt zum Messabschnitt 5 hin verringert, ist in den Fig. 4, 5 und 6 ebenfalls der Querschnitt des Messabschnitts 5 zu sehen. Die Fig. 4, 5 und 6 dienen zur Veranschaulichung verschiedener Messabschnittsymmetrieebenen MSE bei verschiedenen Messabschnittquerschnitten.

Fig. 4 zeigt ein Messrohr 2 mit einem Messabschnitt 5 mit quadratischem Querschnitt. Die Ecken des Messabschnitts 5 sind leicht abgerundet. Der quadratische Messabschnitt weist insgesamt vier Messabschnittsymmetrieebenen MSE1, MSE2, MSE3 und MSE4 auf, wobei die Messabschnittsymmetrieebenen MSE1 und MSE2 jeweils parallel zu einer Seite des Querschnitts liegen, wohingegen die Messabschnittsymmetrieebenen MSE3 und MSE4 den Messabschnitt diagonal schneiden.

Das in Fig. 5 dargestellte Messrohr 2 weist einen Messabschnitt 5 mit einem ovalen Querschnitt auf. Der ovale Messabschnitt weist insgesamt zwei Messabschnittsymmetrieebenen MSE1 und MSE2 auf, wobei die Messabschnittsymmetrieebene MSE1 den Querschnitt entlang seiner Längsseite schneidet und die Messabschnittsymmetrieebene MSE2 den Querschnitt entlang seiner kurzen Seite schneidet.

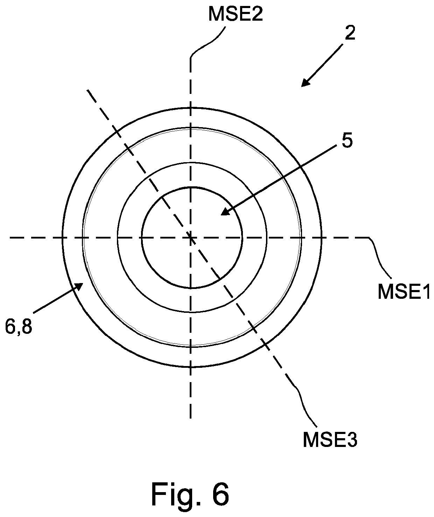

Fig. 6 zeigt ein Messrohr 2 mit einem Messabschnitt 5 mit rundem Querschnitt. Der runde Messabschnitt 5 weist unendlich viele Messabschnittsymmetrieebenen MSE auf, wobei exemplarisch drei Messabschnittsymmetrieebenen MSE1, MSE2 und MSE3 dargestellt sind.

### Bezugszeichen

- 1: magnetisch-induktives Durchflussmessgerät
- 2: Messrohr
- 3: Elektrode
- 4: Einströmabschnitt
- 5: Messabschnitt
- 6: Ausströmabschnitt
- 7: Einlassseite des Einströmabschnitts
- 8: Auslassseite des Ausströmabschnitts
- 9: stufenförmige Erhebung
- 10: erste Seite des Messabschnitts
- 11: zweite Seite des Messabschnitts
- 12: Einlageelement
- 13: Aufwölbung
- L: Längsachse des Messrohrs
- MSE: Messabschnittsymmetrieebene

## Patentansprüche

1. Magnetisch-induktives Durchflussmessgerät (1) zur Bestimmung des Durchflusses eines Mediums, mit einem Messrohr (2) zum Führen des Mediums entlang einer Längsachse (L) des Messrohres (2) und mit zwei Elektroden (3) zum Abgreifen einer in dem Medium induzierten Messspannung, wobei das Messrohr (2) in Strömungsrichtung des Mediums gesehen hintereinander angeordnet einen Einströmabschnitt (4), einen Messabschnitt (5) und einen Ausströmabschnitt (6) aufweist, wobei der Einströmabschnitt (4) einen sich in Strömungsrichtung verringernden Querschnitt aufweist, wobei der Messabschnitt (5) einen konstanten Querschnitt aufweist und symmetrisch in Bezug auf wenigstens eine Messabschnittsymmetrieebene (MSE) ausgebildet ist, wobei die wenigstens eine Messabschnittsymmetrieebene (MSE) parallel zur Längsachse (L) des Messrohrs (2) verläuft und wobei der Ausströmabschnitt (5) einen sich in Strömungsrichtung vergrößernden Querschnitt aufweist,
**dadurch gekennzeichnet,**
**dass** der Ausströmabschnitt (5) zumindest teilweise asymmetrisch in Bezug auf die wenigstens eine Messabschnittsymmetrieebene (MSE) ausgebildet ist.

2. Magnetisch-induktives Durchflussmessgerät (1) nach Anspruch 1, **dadurch gekennzeichnet, dass** der Messabschnitt (5) einen rechteckigen Querschnitt aufweist und dass die wenigstens eine Messabschnittsymmetrieebene (MSE) parallel zu einer langen Seite des Querschnitts liegt.

3. Magnetisch-induktives Durchflussmessgerät (1) nach Anspruch 1, **dadurch gekennzeichnet, dass** der Messabschnitt (5) einen quadratischen Querschnitt aufweist und dass die wenigstens eine Messabschnittsymmetrieebene (MSE) parallel zu einer Seite des Querschnitts liegt.

4. Magnetisch-induktives Durchflussmessgerät (1) nach einem der Ansprüche 1 bis 3, **dadurch gekennzeichnet, dass** der Ausströmabschnitt (5) über seine gesamte Länge asymmetrisch in Bezug auf die wenigstens eine Messabschnittsymmetrieebene (MSE) ausgebildet ist.

5. Magnetisch-induktives Durchflussmessgerät (1) nach einem der Ansprüche 1 bis 3, **dadurch gekennzeichnet, dass** der Ausströmabschnitt (5) über eine begrenzte Längserstreckung asymmetrisch in Bezug auf die wenigstens eine Messabschnittsymmetrieebene (MSE) ausgebildet ist.

6. Magnetisch-induktives Durchflussmessgerät (1) nach einem der Ansprüche 1 bis 5, **dadurch gekennzeichnet, dass** die Asymmetrie dadurch ausgebildet ist, dass der Messabschnitt (5) relativ zum Einströmabschnitt (4) und relativ zum Ausströmabschnitt (6) in einer Richtung senkrecht zur wenigstens einen Messabschnittsymmetrieebene (MSE) versetzt angeordnet ist.

7. Magnetisch-induktives Durchflussmessgerät (1) nach einem der Ansprüche 1 bis 6, **dadurch gekennzeichnet, dass** die Asymmetrie durch eine den Querschnitt reduzierende stufenförmige Erhebung (9) im Ausströmabschnitt (5) ausgebildet ist, insbesondere wobei die stufenförmige Erhebung (9) über den gesamten Umfang des Ausströmabschnitts (5) ausgebildet ist und wobei die stufenförmige Erhebung (9) auf einer ersten Seite (10) der wenigstens einen Messabschnittsymmetrieebene (MSE) zumindest teilweise flacher ausgebildet ist als auf einer zweiten Seite (11) der wenigstens einen Messabschnittsymmetrieebene (MSE).

8. Magnetisch-induktives Durchflussmessgerät (1) nach einem der Ansprüche 1 bis 7, **dadurch gekennzeichnet, dass** die Asymmetrie dadurch ausgebildet ist, dass ein Einlageelement (12) im Ausströmabschnitt (5) angeordnet ist.

9. Magnetisch-induktives Durchflussmessgerät (1) nach einem der Ansprüche 1 bis 8, **dadurch gekennzeichnet, dass** die Asymmetrie durch eine den Querschnitt reduzierende Aufwölbung (13) im Ausströmabschnitt (5) ausgebildet ist.

10. Magnetisch-induktives Durchflussmessgerät (1) nach einem der Ansprüche 1 bis 9, **dadurch gekennzeichnet, dass** der Einströmabschnitt (4) zumindest teilweise asymmetrisch in Bezug auf die wenigstens eine Messabschnittsymmetrieebene (MSE) ausgebildet ist, insbesondere wobei der Einströmabschnitt (4) über seine gesamte Länge asymmetrisch ausgebildet ist, insbesondere gemäß den asymmetrischen Ausgestaltungen des Ausströmabschnitts (5) gemäß den Ansprüchen 4 bis 9.

## Claims

1. Magnetic-inductive flowmeter (1) for determining the flow of a medium, having a measuring tube (2) for guiding the medium along a longitudinal axis (L) of the measuring tube (2) and having two electrodes (3) for tapping a measuring voltage induced in the medium, wherein the measuring tube (2) has an inflow section (4), a measuring section (5) and an outflow section (6) arranged one behind the other as viewed in the flow direction of the medium, wherein the inflow section (4) has a cross-section which decreases in the flow direction, wherein the measuring section (5) has a constant cross-section and is formed symmetrically with respect to a measuring section symmetry plane (MSE), wherein the measuring section symmetry plane (MSE) runs parallel to the longitudinal axis (L) of the measuring tube (2), and wherein the outflow section (6) has a cross-section which increases in the flow direction,
**characterized in**
**that** the outflow section (6) is formed at least partially asymmetrically with respect to the measuring section symmetry plane (MSE).

2. Magnetic-inductive flowmeter (1) according to claim 1, **characterized in that** the measuring section (5) has a rectangular cross-section and that the measuring section symmetry plane (MSE) is parallel to a long side of the cross-section.

3. Magnetic-inductive flowmeter (1) according to claim 1, **characterized in that** the measuring section (5) has a square cross-section and that the measuring section symmetry plane (MSE) is parallel to one side of the cross-section.

4. Magnetic-inductive flowmeter (1) according to any one of claims 1 to 3, **characterized in that** the outflow section (6) is asymmetrical over its entire length with respect to the measurement section symmetry plane (MSE).

5. Magnetic-inductive flowmeter (1) according to any one of claims 1 to 3, **characterized in that** the outflow section (6) is asymmetrical with respect to the measuring section symmetry plane (MSE) over a limited longitudinal extent.

6. Magnetic-inductive flowmeter (1) according to any one of claims 1 to 5, **characterized in that** the asymmetry is formed **in that** the measuring section (5) is offset relative to the inflow section (4) and relative to the outflow section (6) in a direction perpendicular to the measuring section symmetry plane (MSE).

7. Magnetic-inductive flowmeter (1) according to any one of claims 1 to 6, **characterized in that** the asymmetry is formed by a step-shaped elevation (9) reducing the cross-section in the outflow section (6), in particular wherein the step-shaped elevation (9) is formed over the entire circumference of the outflow section (6) and wherein the step-shaped elevation (9) is at least partially flatter on a first side (10) of the measuring section symmetry plane (MSE) than on a second side (11) of the measuring section symmetry plane (MSE).

8. Magnetic-inductive flowmeter (1) according to any one of claims 1 to 7, **characterized in that** the asymmetry is formed by arranging an insert element (12) in the outflow section (6).

9. Magnetic-inductive flowmeter (1) according to any one of claims 1 to 8, **characterized in that** the asymmetry is formed by a bulge (13) reducing the cross-section in the outflow section (6).

10. Magnetic-inductive flowmeter (1) according to any one of claims 1 to 9, **characterized in that** the inflow section (4) is at least partially asymmetrical with respect to the measuring section symmetry plane (MSE), in particular wherein the inflow section (4) is asymmetrical over its entire length, in particular according to the asymmetrical configurations of the outflow section (5) according to claims 4 to 9.

## Revendications

1. Débitmètre électromagnétique (1) servant à déterminer le débit d'un fluide, comprenant un tube de mesure (2) servant à guider le fluide le long d'un axe longitudinal (L) du tube de mesure (2), et deux électrodes (3) servant à prélever une tension de mesure induite dans le fluide, dans lequel le tube de mesure (2), vu dans la direction d'écoulement du fluide, présente une section d'admission (4), une section de mesure (5) et une section d'évacuation (6), disposées les unes après les autres, la section d'admission (4) présentant une section transversale diminuant dans la direction d'écoulement, la section de mesure (5) présentant une section transversale constante et étant réalisée de manière symétrique par rapport à au moins un plan de symétrie de section de mesure (MSE), ledit au moins un plan de symétrie de section de mesure (MSE) s'étendant en parallèle à l'axe longitudinal (L) du tube de mesure (2), et la section d'évacuation (5) présentant une section transversale augmentant dans la direction d'écoulement,
**caractérisé en ce que** la section d'évacuation (5) est réalisée au moins partiellement de manière asymétrique par rapport audit au moins un plan de symétrie de section de mesure (MSE).

2. Débitmètre électromagnétique (1) selon la revendication 1, **caractérisé en ce que** la section de mesure (5) présente une section transversale rectangulaire, et **en ce que** ledit au moins un plan de symétrie de section de mesure (MSE) est situé en parallèle à un grand côté de la section transversale.

3. Débitmètre électromagnétique (1) selon la revendication 1, **caractérisé en ce que** la section de mesure (5) présente une section transversale carrée, et **en ce que** ledit au moins un plan de symétrie de section de mesure (MSE) est situé en parallèle à un côté de la section transversale.

4. Débitmètre électromagnétique (1) selon l'une quelconque des revendications 1 à 3, **caractérisé en ce que** la section d'évacuation (5) est réalisée sur toute sa longueur de manière asymétrique par rapport audit au moins un plan de symétrie de section de mesure (MSE).

5. Débitmètre électromagnétique (1) selon l'une quelconque des revendications 1 à 3, **caractérisé en ce que** la section d'évacuation (5), sur une étendue longitudinale limitée, est réalisée de manière asymétrique par rapport audit au moins un plan de symétrie de section de mesure (MSE).

6. Débitmètre électromagnétique (1) selon l'une quelconque des revendications 1 à 5, **caractérisé en ce que** l'asymétrie est réalisée **en ce que** la section de mesure (5) est disposée de manière décalée par rapport à la section d'admission (4) et par rapport à la section d'évacuation (6) dans une direction perpendiculaire audit au moins un plan de symétrie de section de mesure (MSE).

7. Débitmètre électromagnétique (1) selon l'une quelconque des revendications 1 à 6, **caractérisé en ce que** l'asymétrie est réalisée par un relief étagé (9) réduisant la section transversale dans la section d'évacuation (5), en particulier dans lequel le relief étagé (9) est réalisé sur toute la circonférence de la section d'évacuation (5), et dans lequel le relief étagé (9), sur un premier côté (10) du au moins un plan de symétrie de section de mesure (MSE), est réalisé au moins partiellement de manière plus plate que sur un deuxième côté (11) du au moins un plan de symétrie de section de mesure (MSE).

8. Débitmètre électromagnétique (1) selon l'une quelconque des revendications 1 à 7, **caractérisé en ce que** l'asymétrie est réalisée **en ce qu'**un insert (12) est disposé dans la section d'évacuation (5).

9. Débitmètre électromagnétique (1) selon l'une quelconque des revendications 1 à 8, **caractérisé en ce que** l'asymétrie est réalisée par un bombement réduisant la section transversale (13) dans la section d'évacuation (5).

10. Débitmètre électromagnétique (1) selon l'une quelconque des revendications 1 à 9, **caractérisé en ce que** la section d'admission (4) est réalisée au moins partiellement de manière asymétrique par rapport audit au moins un plan de symétrie de section de mesure (MSE), en particulier dans lequel la section d'admission (4) est réalisée de manière asymétrique sur toute sa longueur, en particulier selon les configurations asymétriques des sections d'évacuation (5) selon l'une quelconque des revendications 4 à 9.
